(19) **Europäisches Patentamt**

**European Patent Office**

**Office européen des brevets**

(11) **EP 1 158 190 B1**

(12) **EUROPEAN PATENT SPECIFICATION**

(45) Date of publication and mention
of the grant of the patent:
**16.02.2005 Bulletin 2005/07**

(51) Int Cl.⁷: **F16C 29/04**

(21) Application number: **01304140.5**

(22) Date of filing: **08.05.2001**

(54) **Linear bearing**

Linearlager

Palier linéaire

(84) Designated Contracting States:
**CH DE FR GB LI SE**

(30) Priority: **08.05.2000 JP 2000134889**

(43) Date of publication of application:
**28.11.2001 Bulletin 2001/48**

(60) Divisional application:
**04000319.6 / 1 413 783**

(73) Proprietor: **Hihaisuto Seiko Co Ltd
Itabashiku, Tokyo (JP)**

(72) Inventor: **Hirose, Kazuya
Tokyo (JP)**

(74) Representative: **Shelley, Mark Raymond et al
K R Bryer & Co.,
7 Gay Street
Bath BA1 2PH (GB)**

(56) References cited:
**EP-A- 0 519 488        CH-A- 476 226
FR-A- 2 208 068        GB-A- 1 028 952
US-A- 3 353 876        US-A- 5 489 253**

**Description**

This invention relates to a linear bearing, and in particular a linear bearing for use in applications requiring high rigidity, such as guide posts of presses and molds.

A known type of linear bearing that provides a mechanism for linear movement along a shaft comprises a guide shaft, an outer cylinder co-axially disposed about the guide shaft and capable of moving in the axial direction thereof relative to the guide shaft, a plurality of rolling elements interposed between the guide shaft and the outer cylinder in the circumferential and axial directions, and a cage provided between the guide shaft and the outer cylinder for retaining the rolling elements. The rolling elements used include balls, rollers, needle rollers etc.

In a linear bearing in which balls are used as the rolling elements, the outer surface of the guide shaft and the inner surface of the outer cylinders are formed as smooth cylindrical surfaces. The outer cylinder and the guide shaft are relatively rotatable about the shaft axis for ease of assembly. However, in this type of arrangement each ball rolling element contacts the inner surface of the outer cylinder and the outer surface of the guide shaft by point contact and this can result in insufficient bearing rigidity. The rigidity of the bearing can be enhanced by increasing the number of balls interposed between the outer cylinder and the guide shaft. In this type of linear bearing there is a limit to the number of interposed balls, and therefore there is also a limit to the rigidity that can be achieved.

In a linear bearing having cylindrical type rollers as the rolling elements, the inner surface of the outer cylinder and the outer surface of the guide shaft are formed to have flat and parallel rolling faces, and the rollers are interposed between these flat and parallel rolling faces. In this type of arrangement, contact of the rollers with the respective flat rolling faces is by line contact, and this can enhance the rigidity of the linear bearing compared with the above-mentioned bearing using balls as the rolling elements. However, forming the flat and parallel rolling faces on the inner surface of the outer cylinder and the outer surface of the guide shaft requires complex machining operations which can significantly increase the cost of production. Furthermore, in this type of arrangement, the relative motion between the outer cylinder and the guide shaft around the axis is not free and when the guide shaft and outer cylinder are assembled with the respective components of an associated mating apparatus, those components must be accurately positioned and adjusted with respect to the linear bearing which may not be readily achievable.

US-A-3,353,876 discloses a linear type bearing. In one embodiment the rollers are barrel-shaped and engage grooves in the inner race of the bearing to provide a line of contact between the roller elements and the inner race. The grooves are the same shape as the barrel shaped rollers, that is to say they have the same curvature. In another of the embodiments the linear bearing is provided with dual-radii roller elements where the roller elements are generally cylindrical but include a central concave surface as well as convex cylindrical end surfaces. The curvature of the central concave surface is identical to the radius of the inner race and the radius of the convex end surfaces is identical to the radius of the outer race.

According to an aspect of the invention there is provided a linear bearing comprising a shaft and an outer cylinder disposed co-axially with the said shaft and moveable with respect to the said shaft in the axial direction thereof, a plurality of generally cylindrical roller elements positioned between the said shaft and the said cylinder, a roller element retaining means for retaining the said roller elements with respect to each other in the circumferential and axial directions of the said shaft; the cylindrical surface of each roller element has a convex curvature (R) which defines a convex circular arc surface of revolution; characterised in that the radius of curvature (R) of the said circular arc surface of revolution is less than the radius (Ro) of the inner cylindrical surface of the said cylinder in contact with the said roller elements.

The circular arc surfaces of revolution formed on the cylindrical surfaces of the rollers are kept in contact with the cylindrical inner surface of the outer cylinder and the cylindrical outer surface of the guide shaft, and since the circular arc surfaces of revolution formed on the cylindrical surfaces of the rollers are adapted to the inner cylindrical surface of the outer cylinder, the contacts between the rollers and the outer cylinder can be considered to be substantially line contacts. In this way, the rigidity of the bearing can be optimised. Furthermore, since the inner surface of the outer cylinder and the outer surface of the guide shaft can be formed as cylindrical surfaces, the outer cylinder and gear shaft can be readily manufactured.

Moreover, in the above described arrangement, the outer cylinder and the guide shaft can rotate relative to each other about the shaft axis, since the inner surface of the outer cylinder and the outer surface of the guide shaft are cylindrical surfaces and the circular arc surfaces of revolution of the rollers contact the outer cylinder and the guide shaft. In this way, the linear bearing can be readily assembled with components of a mating apparatus.

Furthermore, the pitch of rollers disposed in the circular direction may be less than twice the width of each roller so that more rollers can be disposed around the pitch circumference. In comparison with the known construction in which the pitch of the rollers disposed in the circumferential direction is greater than twice the width of each roller, higher bearing rigidity can be obtained if the diameter of the pitch circumference along which the rollers are disposed is the same, or the diameter of the pitch circumference can be made smaller, that is to say, the outer cylinder can be reduced in size for the equivalent rigidity.

According to an embodiment of the invention there is provided a guide shaft, an outer cylinder capable of moving in the axial direction relatively to the guide shaft outside the guide shaft, numerous rolling elements interposed between the guide shaft and the outer cylinder, and a cage provided between the guide shaft and the outer cylinder for retaining said numerous rolling elements disposed in the circumferential direction and in the axial direction, characterised in that each of the rolling elements is a roller having a convex circular arc surface of revolution formed on the cylindrical surface thereof, that the inner surface of the outer cylinder is formed as a cylindrical surface, that the outer surface of the guide shaft is provided with axially extending guide grooves, each having a concave cylindrical surface, corresponding to the respective rows of the rollers disposed in the axial direction, that the radius of the circle constituting the circular arc surface of revolution of each of the rollers is kept slightly smaller than the radius of the circle constituting the cylindrical surface of the outer cylinder and the radius of the circle constituting the concave cylindrical surface of each of the grooves formed in the guide shaft, and that the pitch of the rollers disposed in the circumferential direction is kept smaller than twice the width of each roller.

In this arrangement the contacts of the circular arc surfaces of revolution of the rollers with the inner surface of the outer cylinder and the guide grooves of the guide shaft can be considered to be substantially line contacts, since the circular arc surfaces of revolution formed on the cylindrical surfaces of the rollers contact the inner cylindrical surface of the outer cylinder and the concave cylindrical surfaces of the guide grooves of the guide shaft. In comparison with the known arrangements, arrangements according to this aspect of the invention enable higher rigidity to be achieved.

As described above, in order to further enhance the rigidity of the linear bearing according to the second aspect of the invention, the guide shaft has guide grooves formed, each having a concave cylindrical surface. However, since it is only required that the guide grooves are formed on the outer surface of the guide shaft, the pitch accuracy of the guide grooves around the guide shaft is not so important, and therefore the grooves may be readily manufactured. In addition, the inner surface of the outer cylinder is a cylindrical surface and the outer cylinder and the guide shaft can rotate relatively to each other around the shaft axis. In this way, the linear bearing can be easily assembled with components of a mating apparatus.

Preferably, the pitch of the rollers disposed in the circumferential direction of the shaft is less than twice the width of each roller. Therefore, more rollers can be disposed along the pitch circumference with the same diameter. In comparison with known arrangements in which the pitch of the rollers disposed in the circumferential direction is greater than twice the width of each roller, high rigidity can be achieved if the diameter of the pitch circumference along which the rollers are disposed is the same, or the diameter of the circumference can be made smaller, that is, the outer cylinder can have a smaller diameter, if it is intended to achieve equivalent rigidity.

Preferably, each of the rollers has a width dimension smaller than its respective diameter.

Preferably, the radius of the circle constituting the circular arc surface of revolution of each roller is set at 93% to 96% of the radius of the circle constituting the cylindrical surface of the outer cylinder.

Preferably, the radius of the circle constituting the concave cylindrical surface of each guide groove is set at 1.04 to 1.08 times the radius of the circle constituting the circular arc surface of revolution of each roller.

In preferred embodiments, the radius of the circle constituting the concave cylindrical surface of each of the guide grooves of the guide shaft is equal to the radius of the circle constituting the cylindrical surface of the outer cylinder. In other embodiments the radius of these circles can be different.

Various embodiments of the invention will now be more particularly described by way of example only, with reference to the accompanying drawings, in which:

Figure 1 is a cross-section view showing a first arrangement of a linear bearing of the invention;
Figure 2 is a cross-section view of the linear bearing of Figure 1 along line A-A of Figure 1;
Figure 3 is detail sectional view showing part of the cross section of Figure 2;
Figure 4 is an expanded illustration showing a roller in the same view as Figure 3;
Figure 5 is a vertical cross-section view showing a second arrangement of a linear bearing of the invention;
Figure 6 is a cross-section view of the linear bearing of Figure 5 along the line B-B of Figure 5.
Figure 7 is a detail sectional view showing the cross-section of Figure 5; and,
Figure 8 is an expanded illustration showing a roller and a part of the guide shaft of Figure 6.

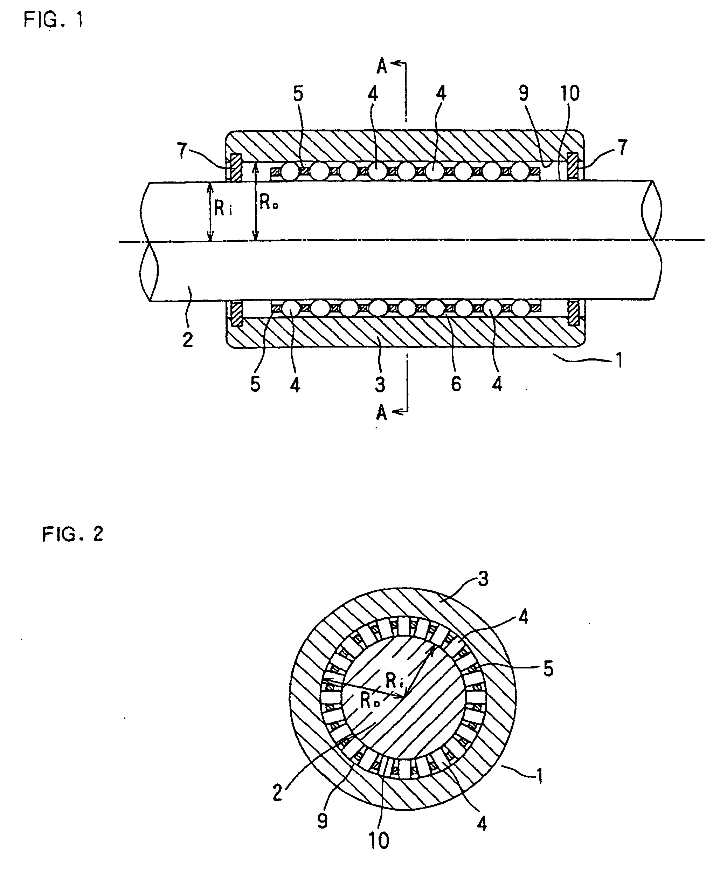

Figures 1 through 4 show a first embodiment of a linear bearing 1. The linear bearing 1 comprises a guide shaft 2, an outer cylinder 3 co-axially disposed about the guide shaft 2 and capable of moving in the axial direction of the shaft, in relation to the guide shaft 2 on the external side thereof. A plurality of rollers 4 as rolling elements are interposed in a radial gap between the guide shaft 2 and the outer cylinder 3. A cage 5 is provided in the gap between the guide shaft 2 and the outer cylinder 3 for retaining the rollers 4. The rollers 4 are disposed in the circumferential direction and in the axial direction of the shaft. The cage 5 has a cylindrical form in which a plurality of retaining holes 6 or interstices are arranged in the circumferential direction and in the axial direction of the shaft. The rollers 4 are engaged by the retaining holes 6.

In the embodiment of Figures 1 to 4, nine rollers 4 are disposed in each row in the axial direction as shown in Figure 1, and twenty-four rollers 4 are disposed in each row in the circumferential direction as shown in Figure 2. Furthermore, in this embodiment, locating snap rings 7 are installed between the shaft and the outer cylinder at both ends of the outer cylinder 3.

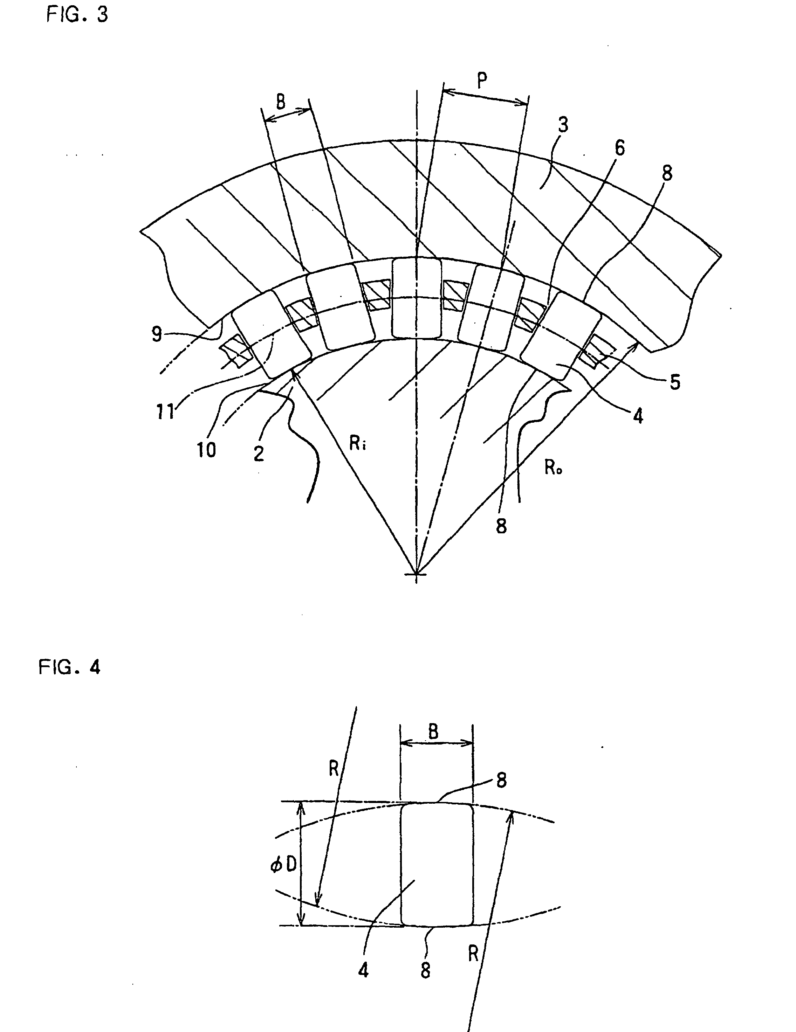

As shown in Figure 3, the inner surface 9 of the outer cylinder 3 and the outer surface 10 of the guide shaft 2 define respective cylindrical surfaces, and the radii of the circles constituting the cylindrical surfaces 9 and 10 are expressed as Ro and Ri respectively in the drawing. Each of the rollers 4 has a convex circular arc surface of revolution 8 formed on the cylindrical surface thereof. The radius of the circle constituting the circular arc surface of revolution 8 is expressed as R in the drawing. The radius R of the circle constituting the circular arc surface of revolution 8 of each roller 4 is set to be slightly smaller than the radius Ro of the circle constituting the cylindrical surface 9 of the outer cylinder 3, and for example, it is preferable that the radius R is set at 93% to 96% of the radius Ro. That is to say, the relationship between the radii R and Ro can be expressed by the following formula:

$$R = (0.93 \sim 0.96) \times Ro$$

The width of each roller 4 is less than the diameter of the roller. As shown in Figure 4, if the diameter of each roller 4 is ø D, and the width of each roller 4 is B, then the relationship between them can be expressed by the following formula:

$$B < ø D$$

In this arrangement, B is set at 0.6 x ø D, but the width dimension B can be set differently if required.

Moreover, in this arrangement, the pitch of the rollers 4 disposed in the circumferential direction is less than twice the width B of each roller 4, that is to say if the pitch is P, the relationship between pitch P and width B can be expressed by the following formula:

$$P < 2 \times B$$

In the linear bearing 1, the circular arc surfaces of revolution 8 of the rollers 4 contact the inner cylindrical surface 9 of the outer cylinder 3 and the outer surface 10 of the guide shaft 2. Since the radius R of the circular arc surface of revolution 8 of each roller 4 is slightly smaller than the radius Ro of the inner cylindrical surface of the outer cylinder 3, or preferably 93% to 96% of the radius Ro of the cylindrical surface as described above, the contacts between them are substantially line contacts. Therefore, in comparison with linear bearing using balls as rolling elements, bearing rigidity can be enhanced.

Furthermore, since the pitch P of the rollers 4 disposed in the circumferential direction is less than twice the width B of each roller 4, more rollers can be disposed around the pitch circle circumference of the same diameter (indicated by a one-dot-dash line and given symbol 11 in the drawing), in comparison with known arrangements in which the pitch P of the rollers 4 is greater than twice the width B of each roller 4. In this way this arrangement enables the contact area to be increased.

In comparison with known arrangements in which the pitch P of rollers in the circumferential direction is greater than twice the width B of each roller 4, higher rigidity can be achieved if the diameter of the circumference along which the rollers 4 are disposed is the same, or the diameter of the pitch circumference can be reduced, that is to say, the inner diameter of the outer cylinder 3 can be reduced without affecting rigidity.

In this arrangement the width B of each roller 4 is less than the diameter ø D of the roller and therefore additional rollers 4 can be disposed along the pitch circumference 11 for the same pitch circle diameter. In this way greater rigidity can be achieved if the diameter of the circumference along which the rollers are disposed is the same, or the diameter of the circumference can be reduced, that is to say, the inner diameter of the outer cylinder can be reduced without affecting bearing rigidity.

In this arrangement the inner surface 9 of the outer cylinder 3 and the outer surface 10 of the guide shaft 2 are formed as cylindrical surfaces. This readily enables the linear bearing to be manufactured at low production costs.

In this arrangement the inner surface 9 of the outer cylinder 3 and the outer surface 10 of the guide shaft 2 are formed as cylindrical surfaces and the circular arc surfaces of revolution 8 of the rollers 4 contact those cylindrical surfaces, such that the outer cylinder 3 and the guide shaft 2 rotate relative to each other around the shaft axis. In this way the linear bearing can be easily assembled with components of a mating apparatus.

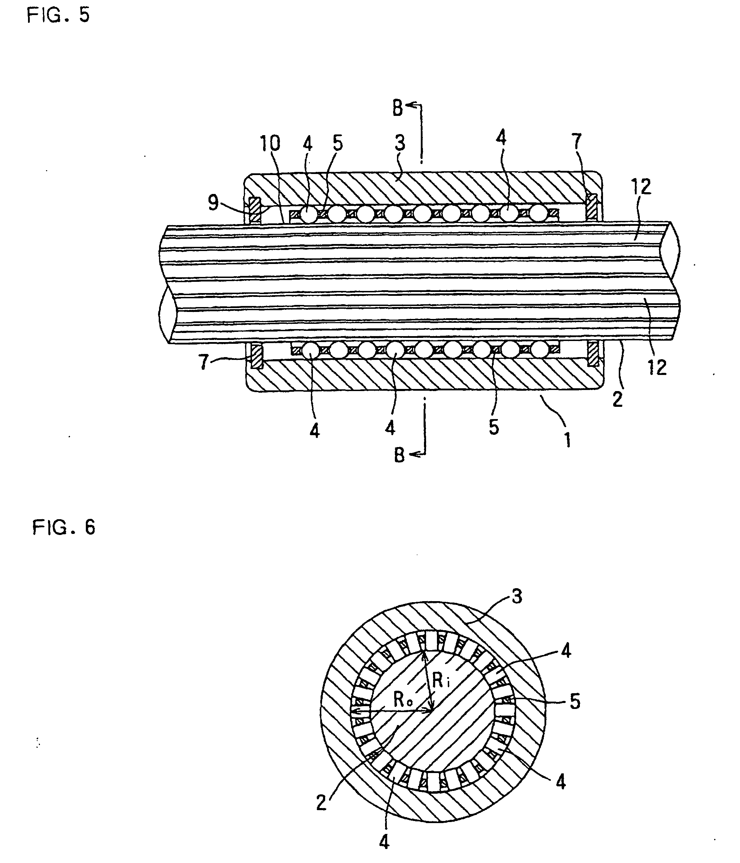

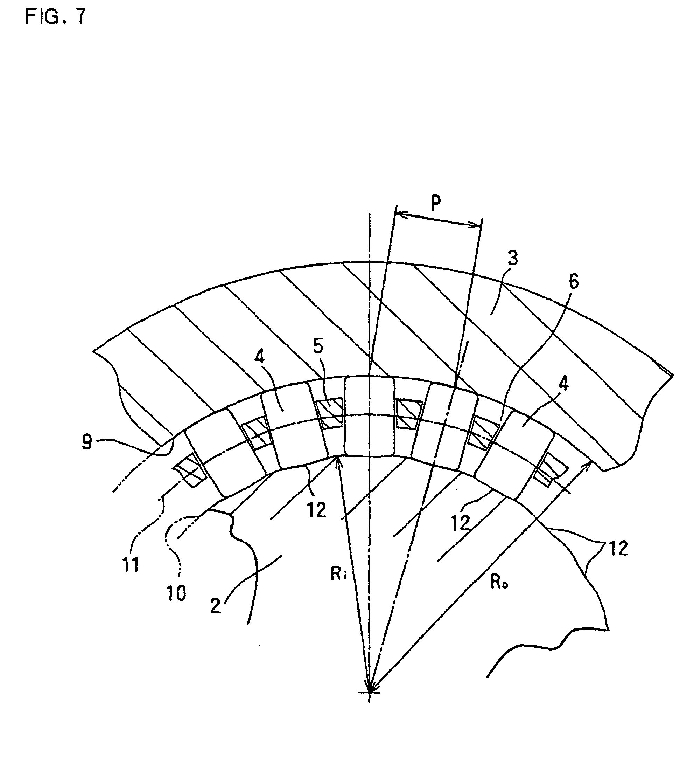

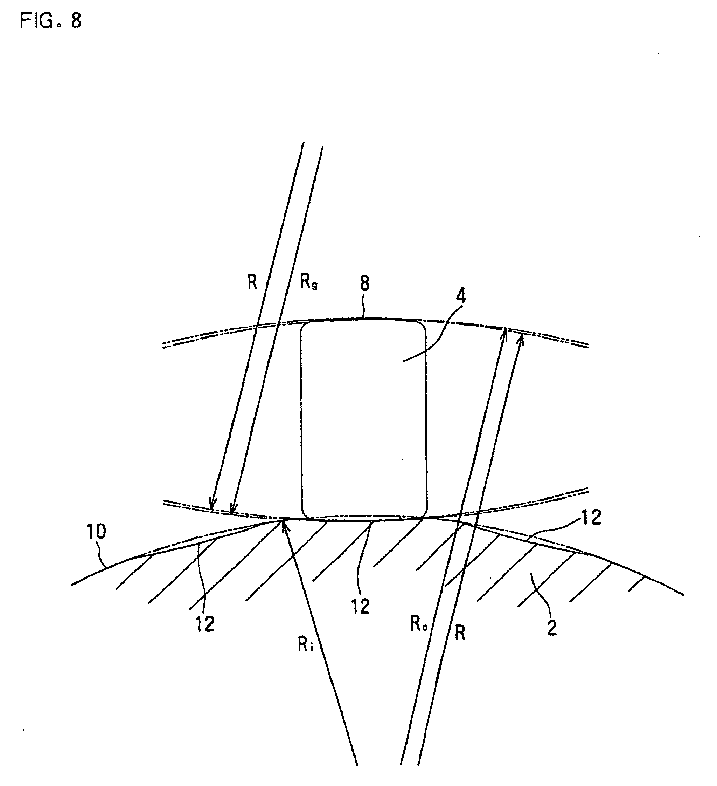

Figures 5 through 8 show a second arrangement of the invention. The general construction of this arrangement is similar to that of the above-mentioned first arrangement and therefore the components of the second arrangement corresponding to the components of the first arrangement share the same reference numerals as given in Figure 1 through 4.

In the second arrangement, the outer surface 10 of the guide shaft 2 is provided with axially extending guide grooves 12, each having a concave cylindrical surface. The grooves correspond to the respective axial rows of rollers 4, that is to say, in this arrangement, twenty four circumferentialy spaced guide grooves 12 are formed around the guide shaft 2. The radius Rg of the circular concave cylindrical surface of each guide groove 12 is greater than the radius R of the circle constituting the circular arc surface of revolution 8 of each roller 4. For example, preferably, Rg is in the range 1.04 to 1.08 times the radius R. In this way, the radius Rg can be equal to the radius Ro of the circle constituting the cylindrical surface 9 of the outer cylinder 3, or may be different as required.

In the linear bearing of this second arrangement, the rigidity can be further enhanced compared with the first arrangement of the invention, since the circular arc surfaces of revolution 8 formed on the cylindrical surfaces of the rollers 4 contact the inner surface 9 of the outer cylinder 3 and the guide grooves 12 of the guide shaft 2 substantially as line contacts.

In the linear bearing of this second arrangement, the guide grooves 12, each having a concave cylindrical surface, are formed on the guide shaft 2 to further enhance the rigidity as described above. However, since it is only required that the guide grooves 12 are formed on the outer surface 10 of the guide shaft 2, the pitch accuracy of the guide grooves 12 around the guide shaft 2 is not critical, and therefore the grooves may be readily manufactured. In addition, the inner surface 9 of the outer cylinder 3 is formed as a cylindrical surface. This readily enables the outer cylinder 3 and the guide shaft 2 rotate relative to each other about the shaft axis. In this way, the linear bearing can be easily assembled with a mating apparatus.

The invention described above provides a linear bearing that has higher rigidity, can be produced easily, is lower in production cost, and can be easily assembled with a mating apparatus, in comparison with known linear bearings.

**Claims**

1. A bearing comprising a shaft (2) and an outer cylinder (3) disposed co-axially with the said shaft and moveable with respect to the said shaft in the axial direction thereof, a plurality of generally cylindrical roller elements (4) positioned between the said shaft and the said cylinder, a roller element retaining means (5) for retaining the said roller elements with respect to each other in the circumferential and axial directions of the said shaft; the cylindrical surface (8) of each roller element has a convex curvature (R) which defines a convex circular arc surface of revolution; **characterised in that** the radius of curvature (R) of the said circular arc surface of revolution is less than the radius (Ro) of the inner cylindrical surface of the said cylinder in contact with the said roller elements.

2. A bearing as claimed in Claim 1 wherein the pitch dimension (D) of the rollers in the circumferential direction of the said shaft is less than twice the width dimension (B) of the said rollers.

3. A bearing as claimed in Claim 1 or Claim 2 wherein the outer surface (10) of the said shaft comprises a plurality of axially extending grooves (12) circumferentially spaced about the said outer surface for contact with respective axial rows of the said rollers, the said grooves each having a concave curvature in the circumferential direction of the said shaft.

4. A bearing as claimed in Claim 3 wherein the radius (R) of the said circular arc surface of revolution of each of the said rollers is less than the radius (Rg) of curvature of the said concave surface of each of the said grooves.

5. A linear bearing as claimed in any preceding claim wherein the said width (B) of each of the said rollers is less than the diameter (øD) of the said roller.

6. A linear bearing as claimed in any preceding claim wherein the radius (R) of curvature of the said circular arc surface of revolution (8) of each of the rollers is in the range 93% to 96% of the radius (Ro) of the said cylindrical surface of the outer cylinder.

7. A bearing as claimed as claimed in Claim 3 or any one of Claims 4 to 6 when directly or indirectly dependent on Claim 3, wherein the radius (Rg) of the said concave cylindrical surface of each of the said guide grooves is in the range of 1.04 to 1.08 times the radius of curvature (R) of the said circular arc surface of revolution of each of the said rollers.

8. A bearing as claimed in Claim 3 or anyone of claims 4 to 7 when directly or indirectly dependent on Claim 3, wherein the said radius of curvature of the said concave cylindrical surface (Rg) of each of the said guide grooves of the said guide shaft is equal to the said radius of the said cylindrical surface of the said outer cylinder.

9. A bearing as claimed in Claim 3 or any one of Claims 4 to 7 when directly or indirectly dependent on Claim 3, wherein the said radius of curvature (Rg) of the said concave cylindrical surface of each of the said guide grooves of the said guide shaft is different from the radius (Ro) of the said cylindrical surface of the outer cylinder.

**Patentansprüche**

1. Lager mit

- einem Schaft (2) und
- einem äußeren Zylinder (3), der koaxial zum Schaft angeordnet ist und in dessen axialer Richtung relativ zum Schaft bewegbar ist,
- einer Vielzahl von etwa zylindrischen Wälzkörpern (4), die zwischen dem Schaft und dem Zylinder angeordnet sind,
- einem Wälzkörper-Haltemittel (5) zum Halten der Wälzkörper relativ zueinander in Umfangsrichtung und axialer Richtung des Schaftes,

wobei die Zylinderfläche (8) jedes Wälzelementes eine konvexe Krümmung (R) aufweist, die einen konvexen kreisbogenförmigen Wälzkörper definiert,

**dadurch gekennzeichnet, dass**

der Krümmungsradius (R) des kreisbogenförmigen Wälzkörpers kleiner ist als der Radius (Ro) der inneren Zylinderfläche des Zylinders, der in Kontakt mit dem Wälzkörper ist.

2. Lager nach Anspruch 1,
   **dadurch gekennzeichnet, dass**
   der Abstand (P) der Wälzkörper in Umfangsrichtung des Schaftes kleiner ist als die doppelte Breite (B) der Wälzkörper.

3. Lager nach Anspruch 1 oder 2,
   **dadurch gekennzeichnet, dass**
   die Außenfläche (10) des Schaftes mehrere sich axial erstreckende Rinnen (12) aufweist, die entlang des Umfanges beabstandet auf der Außenfläche angeordnet sind zum Kontaktieren der entsprechenden Reihen von Wälzkörpern, wobei jede Rinne eine konkave Krümmung aufweist, die sich in Umfangsrichtung des Schaftes erstreckt.

4. Lager nach Anspruch 3,
   **dadurch gekennzeichnet, dass**
   der Radius (R) des kreisbogenförmigen Rotationskörpers jedes Wälzkörpers kleiner ist als der Radius (Rg) der Krümmung der konkaven Flächen der Rinnen.

5. Linearlager nach einem der vorhergehenden Ansprüche,
   **dadurch gekennzeichnet, dass**
   die Breite (B) der Wälzkörper kleiner ist als der Durchmesser (D) der Wälzkörper.

6. Linearlager nach einem der vorhergehenden Ansprüche,
   **dadurch gekennzeichnet, dass**
   der Krümmungsradius (R) des kreisbogenförmigen Rotationskörpers (8) der Wälzkörper zwischen 93 % und 96 % des Radius (Ro) der Zylinderfläche des äußeren Zylinders beträgt.

7. Lager nach Anspruch 3 oder einem der Ansprüche 4 bis 6,
   sofern diese direkt oder indirekt auf Anspruch 3 rückbezogen sind,
   **dadurch gekennzeichnet, dass**
   der Radius (Rg) der konkaven zylindrischen Fläche der Führungs-Rinnen zwischen dem 1,04-fachen und dem 1,08-fachen des Krümmungsradius (R) der kreisbogenförmigen Rotationsfläche des Wälzkörpers beträgt.

8. Lager nach Anspruch 3 oder einem der Ansprüche 4 bis 7,
   sofern diese direkt oder indirekt auf Anspruch 3 rückbezogen sind,
   **dadurch gekennzeichnet, dass**
   der Krümmungsradius (Rg) der konkaven zylindrischen Fläche der Führungs-Rinnen des Führungsschaftes gleich dem Radius der Zylinderfläche des äußeren Zylinders ist.

9. Lager nach Anspruch 3 oder einem der Ansprüche 4 bis 7,
   sondern dieser direkt oder indirekt auf Anspruch 3 rückbezogen ist,
   **dadurch gekennzeichnet, dass**
   der Krümmungsradius (Rg) der konkaven zylindrischen Fläche der Führungs-Rinnen des Führungsschaftes sich vom Radius (Ro) der Zylinderfläche des äußeren Zylinders unterscheidet.

## Revendications

1. Palier comprenant un arbre (2) et un cylindre extérieur (3) agencé coaxialement avec ledit arbre et mobile par rapport audit arbre dans la direction axiale de celui-ci, une pluralité d'éléments de rouleaux généralement cylindriques (4) positionnés entre ledit arbre et ledit cylindre, un moyen de retenue des éléments rouleaux (5) pour retenir lesdits éléments de rouleaux l'un par rapport à l'autre dans les directions circonférentielle et axiale dudit arbre ; la surface cylindrique (8) de chaque élément de rouleau a une courbure convexe (R) qui définit une surface d'arc de révolution circulaire convexe ; **caractérisé en ce que** le rayon de courbure (R) de ladite surface d'arc de révolution circulaire est inférieur au rayon (Ro) de la surface cylindrique intérieure dudit cylindre en contact avec lesdits éléments de rouleaux.

2. Palier selon la revendication 1 dans lequel la dimension du pas (D) des rouleaux dans la direction circonférentielle dudit arbre est inférieure à la moitié de la dimension en largeur (B) desdits rouleaux.

3. Palier selon la revendication 1 ou la revendication 2 dans lequel la surface extérieure (10) dudit arbre comprend une pluralité de rainures s'étendant axialement (12) espacées de manière circonférentielle sur ladite surface extérieure pour un contact avec des rangées axiales respectives desdits rouleaux, lesdites rainures ayant chacune une courbure concave dans la direction circonférentielle dudit arbre.

4. Palier selon la revendication 3 dans lequel le rayon (R) de ladite surface d'arc de révolution circulaire de chacun desdits rouleaux est inférieur au rayon (Rg) de courbure de ladite surface concave de chacune desdites rainures.

5. Palier linéaire selon l'une quelconque des revendications précédentes dans lequel ladite largeur (B) de chacun desdits rouleaux est inférieure au diamètre (ØD) dudit rouleau.

6. Palier linéaire selon l'une quelconque des revendications précédentes dans lequel le rayon (R) de courbure de ladite surface d'arc de révolution circulaire (8) de chacun des rouleaux est dans la plage de 93 % à 96 % du rayon (Ro) de ladite surface cylindrique du cylindre extérieur.

7. Palier selon la revendication 3 ou l'une quelconque des revendications 4 à 6 lorsqu'elle est directement ou indirectement dépendante de la revendication 3, dans lequel le rayon (Rg) de ladite surface cylindrique concave de chacune desdites rainures de guidage est dans la plage de 1,04 à 1,08 fois le rayon de courbure (R) de ladite surface d'arc de révolution circulaire de chacun desdits rouleaux.

8. Palier selon la revendication 3 ou l'une quelconque des revendications 4 à 7 lorsqu'elle est directement ou indirectement dépendante de la revendication 3, dans lequel ledit rayon de courbure de ladite surface cylindrique concave (Rg) de chacune desdites rainures de guidage dudit arbre de guidage est égal audit rayon de ladite surface cylindrique dudit cylindre extérieur.

9. Palier selon la revendication 3 ou l'une quelconque des revendications 4 à 7 lorsqu'elle est directement ou indirectement dépendante de la revendication 3, dans lequel ledit rayon de courbure (Rg) de ladite surface cylindrique concave de chacune desdites rainures de guidage dudit arbre de guidage est différent du rayon (Ro) de ladite surface cylindrique du cylindre extérieur.

EP 1 158 190 B1

FIG. 1

FIG. 2

FIG. 3

FIG. 4

FIG. 5

FIG. 6

FIG. 7

FIG. 8